# EUROPEAN PATENT APPLICATION

(11) **EP 4 822 442 A1**
(43) Date of publication of application: **14.10.2026**
(21) Application number: 26171036.2
(22) Date of filing: 07.04.2026
(51) Int. Cl.: G03G 15/00

(54) **IMAGE FORMING APPARATUS**

(30) Priority: 11.04.2025 JP 2025065922
(71) Applicant: KYOCERA Document Solutions Inc., Osaka-shi, Osaka 540-8585 (JP)
(72) Inventor: SAKAMOTO, Yasuaki, Osaka-shi, Osaka 540-8585 (JP); MATSUMOTO, Makoto, Osaka-shi, Osaka 540-8585 (JP); WATANABE, Masaru, Osaka-shi, Osaka 540-8585 (JP); MORIKAMI, Ayato, Osaka-shi, Osaka 540-8585 (JP); KOTANI, Yukiko, Osaka-shi, Osaka 540-8585 (JP)
(74) Representative: Herrero & Asociados, S.L.

(57) **Abstract**

A controller (100) controls driving of an image forming device (12) to form a patch image on an intermediate transfer body (125). At the same time, the controller (100) calculates a rate of change of a background density based on a reference background density as a reference value of a density of a surface of the intermediate transfer body (125) detected by a density detection sensor (128) at a predetermined detection timing, and the background density newly detected by the density detection sensor (128) after the reference background density is detected. The controller (100) corrects the background density and an image density of the patch image detected by the density detection sensor (128) using the calculated rate of change. The controller (100) adjusts the image forming conditions based on the corrected background density and image density.

## Description

### BACKGROUND

The present invention relates to an intermediate transfer type image forming apparatus.

An intermediate transfer type image forming apparatus includes an intermediate transfer belt, and images of the respective colors are sequentially superimposed on the intermediate transfer belt and primarily transferred and then secondarily transferred onto a recording medium. The image forming apparatus also forms a patch image on the intermediate transfer belt, detects an image density of the patch image, and adjusts image forming conditions (for example, a transfer bias) based on the detected image density, thereby stabilizing the image quality during formation on the recording medium. This process is called calibration.

### SUMMARY

As one aspect of the present invention, a technique that further improves the above technique is proposed.

An image forming apparatus according to one aspect of the present invention includes an image forming device, a density detection sensor, and a controller. The image forming device primarily transfers an image to an intermediate transfer body and then secondarily transfers the primarily transferred image from the intermediate transfer body to a recording medium, thereby forming the image on the recording medium. The density detection sensor detects a surface density of the intermediate transfer body. The controller controls the driving of the image forming device to form a patch image on the intermediate transfer body, and calculates a rate of change of a background density based on a reference background density as a reference value of the surface density of the intermediate transfer body detected by the density detection sensor at a predetermined detection timing and the background density newly detected by the density detection sensor after the reference background density is detected. The controller corrects the background density and an image density of the patch image detected by the density detection sensor using the calculated rate of change. The controller adjusts the image forming conditions based on the corrected background density and the corrected image density.

### BRIEF DESCRIPTION OF THE DRAWINGS

FIG. 1 is a front cross-sectional view showing a structure of an image forming apparatus according to an embodiment of the present invention.
FIG. 2 is a functional block diagram schematically showing a main internal configuration of the image forming apparatus according to the embodiment of the present invention.
FIG. 3 is a flowchart showing an example of processes performed by a control unit of the image forming apparatus.
FIG. 4 is a flowchart showing an example of processes performed by the control unit of the image forming apparatus.
FIG. 5A is a plan view schematically showing an intermediate transfer belt on which a patch image is formed.
FIG. 5B is a plan view schematically showing the intermediate transfer belt on which the patch image is formed.
FIG. 6A is a diagram showing an example of a position of a background density of the intermediate transfer belt detected by a density detection sensor.
FIG. 6B is a diagram showing an example of the position of the background density of the intermediate transfer belt detected by the density detection sensor.
FIG. 7A is a diagram showing an example of the background density and an image density detected by the density detection sensor.
FIG. 7B is a diagram showing an example of the background density and the image density after correction.

### DETAILED DESCRIPTION

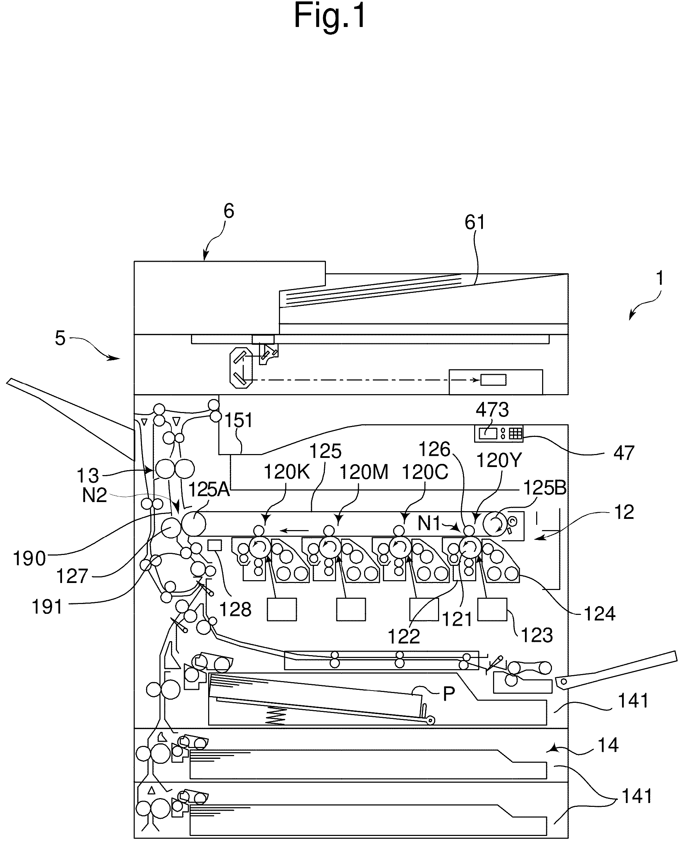

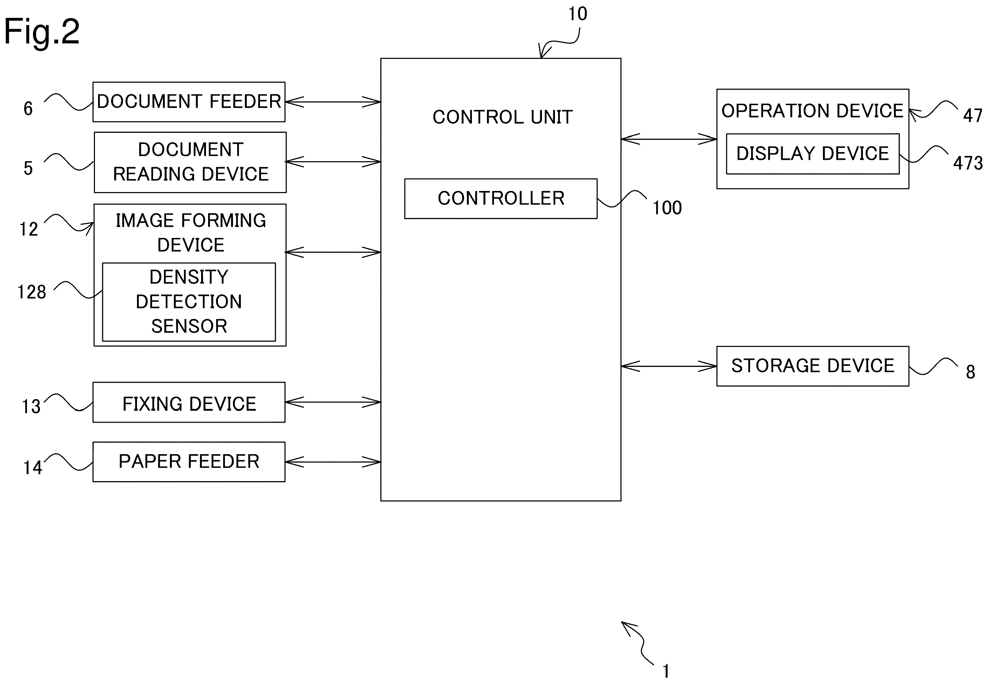

An image forming apparatus according to an embodiment of the present invention will be described below with reference to the drawings. FIG. 1 is a front cross-sectional view showing a structure of the image forming apparatus according to the embodiment of the present invention. FIG. 2 is a functional block diagram schematically showing a main internal configuration of the image forming apparatus according to the embodiment of the present invention.

The image forming apparatus 1 is a multifunction device that has multiple functions, such as a copy function, a printer function, a scanner function, a facsimile function, and the like. The image forming apparatus 1 includes a control unit 10, a document feeder 6, a document reading device 5, an image forming device 12, a fixing device 13, a paper feeder 14, an operation device 47, and a storage device 8.

The document feeder 6 is configured to be openable and closable on a top surface of the document reading device 5 using a hinge or the like (not shown), and the document feeder 6 functions as a document pressing cover when a document placed on a platen glass (not shown) is read. The document feeder 6 is an auto document feeder (ADF) that includes a document placement tray 61 and supplies documents placed on the document placement tray 61 to the document reading device 5.

The document reading device 5 includes a scanner and the like, and reads a document fed from the document feeder 6 or a document placed on a platen glass.

A description will be given of a document reading operation performed by the image forming apparatus 1. The document reading device 5 optically reads an image of a document supplied to the document reading device 5 by the document feeder 6 or a document placed on the platen glass, and generates image data. The image data generated by the document reading device 5 is stored in an image memory or the like (not shown).

A description will be given of an image forming operation performed by the image forming apparatus 1. The image forming device 12 includes image forming units 120Y, 120C, 120M, and 120K (hereinafter, also collectively referred to as "image forming units 120") for each color (yellow, cyan, magenta, and black). Each of the image forming units 120 includes a photosensitive drum 121 as an image carrier that carries a toner image, a charging device 122, an exposure device 123, a developing device 124, and a primary transfer device (a primary transfer roller 126), and is a mechanism that forms an image on recording paper as a recording medium by secondary transfer via an intermediate transfer belt 125 that is stretched between a drive roller 125A and a driven roller 125B. The intermediate transfer belt 125 is an example of an intermediate transfer body in the claims.

The charging device 122 charges a surface of the photosensitive drum 121. The exposure device 123 exposes a charged surface of the photosensitive drum 121 to light to form an electrostatic latent image on the surface of the photosensitive drum 121. The developing device 124 contains toner for developing an electrostatic latent image, and develops the electrostatic latent image formed on the surface of the photosensitive drum 121.

The image forming unit 120 for each color forms a toner image on the photosensitive drum 121 through processes of charging, exposing, and developing based on an image made up of each color component, and the toner image is transferred onto the intermediate transfer belt 125 by the primary transfer roller 126. That is, the primary transfer roller 126 transfers the toner image on the photosensitive drum 121 onto the intermediate transfer belt 125 at a transfer nip N1 formed between the photosensitive drum 121 and the intermediate transfer belt 125.

The intermediate transfer belt 125 has an image carrying surface on an outer surface thereof onto which a toner image is transferred, and is driven by drive roller 125A while it is in contact with the surface of photosensitive drum 121. The intermediate transfer belt 125 runs endlessly between the drive roller 125A and the driven roller 125B in synchronization with each photosensitive draaum 121.

The toner images of each color transferred onto the intermediate transfer belt 125 are superimposed on each other on the intermediate transfer belt 125 to form a color toner image. The secondary transfer roller 127 transfers the color toner image formed on the surface of the intermediate transfer belt 125 onto the recording paper P transported from the paper feeder 14 by a pair of transport rollers 191 provided at an appropriate position on a transport path 190 at a fixing nip N2 between the drive roller 125A and the secondary transfer roller 127 with the intermediate transfer belt 125 interposed therebetween.

Under control of a controller 100 described below, the image forming device 12 forms a toner image on the recording paper P fed from the paper feeder 14 based on image data generated by the document reading operation, image data stored in an image memory, or the like, and image data received from a computer connected to a network, to create a printed matter. The image forming device 12 also includes a density detection sensor 128.

The density detection sensor 128 is a reflective sensor equipped with a light emitting diode (LED) light emitting element and a photodiode light receiving element, and is disposed downstream of the image forming unit 120 in a rotation direction of the intermediate transfer belt 125 so as to face a belt surface of the intermediate transfer belt 125. The density detection sensor 128 radiates light from an LED light emitting element onto the intermediate transfer belt 125. The density detection sensor 128 then receives reflected light with the light receiving element and outputs a voltage signal corresponding to the received reflected light to the control unit 10, thereby detecting the background density of the intermediate transfer belt 125 and the image density of the toner image.

The paper feeder 14 includes a paper feed cassette 141, and further includes a pickup roller that picks up recording paper P from the paper feed cassette 141 and feeds it to the image forming device 12, a transport roller, a transport path, and a rotation drive mechanism for each roller.

The fixing device 13 is a fixing device equipped with a heat roller, a pressure roller, and a drive mechanism for rotating the rollers. The fixing device 13 heats and presses the recording paper P on which a toner image has been formed by the image forming device 12 using the nip between the two rollers, thereby fixing the toner image to the recording paper P, and the recording paper P that has undergone the fixing process is discharged to a discharge tray 151.

The operation device 47 has various hard keys that are operated by a user, and receives instructions from the user, such as instructions to execute an image forming operation, regarding various operations and processes that can be executed by the image forming apparatus 1, in accordance with the operation of the hard keys.

The operation device 47 includes a display device 473 that displays operation guides and the like to an operator. The operation device 47 also receives input of instructions from the user via a touch panel included in the display device 473, based on a user's operation (a touch operation) on a screen displayed on the display device 473.

The display device 473 is configured of a liquid crystal display (LCD) or the like. When the operator touches a button or key displayed on the screen, a touch panel receives an instruction corresponding to a touched position. In this case, the touch panel functions as the operation device.

The storage device 8 is a large-capacity storage device such as a hard disk drive (HDD) or a solid state drive (SSD), and stores various control programs and the like.

The control unit 10 includes a processor, a random access memory (RAM), a read only memory (ROM), and a dedicated hardware circuit. The processor may be, for example, a central processing unit (CPU), an application specific integrated circuit (ASIC), or a micro processing unit (MPU). The control unit 10 includes a controller 100.

The control unit 10 functions as the controller 100 through the operation of the processor in accordance with a control program stored in the storage device 8. However, the controller 100 can also be configured of a hardware circuit, regardless of the operation in accordance with a control program by the control unit 10. Unless otherwise specified below, the same applies to each embodiment.

The controller 100 controls the overall operation of the image forming apparatus 1. The controller 100 is connected to the document feeder 6, the document reading device 5, the image forming device 12, the fixing device 13, the paper feeder 14, the operation device 47, and the storage device 8, and controls the driving of them.

For example, the controller 100 controls the driving of the image forming device 12 based on predetermined image forming conditions, and executes various processes required for image formation by the image forming apparatus 1. The image forming conditions include, for example, charging bias applied to the charging device 122, an intensity (an amount of exposure) of laser light radiated onto the surface of the photosensitive drum 121 by the exposure device 123, development bias applied to the developing device 124, and transfer bias applied to the primary transfer roller 126.

In addition, the controller 100 controls the driving of the image forming device 12 to form a patch image on the intermediate transfer belt 125, calculates a rate of change of the background density based on a reference background density of the intermediate transfer belt 125 detected by the density detection sensor 128 at a predetermined detection timing and a background density newly detected by the density detection sensor 128 after the reference background density was detected, corrects the background density and the image density of the patch image detected by the density detection sensor 128 using the calculated rate of change, and adjusts the image forming conditions based on the corrected background density and image density.

The detection timing is, for example, when the image forming apparatus 1 is started up (when the image forming apparatus 1 is powered on) or when the image forming apparatus 1 returns from a power saving mode to a normal operation mode.

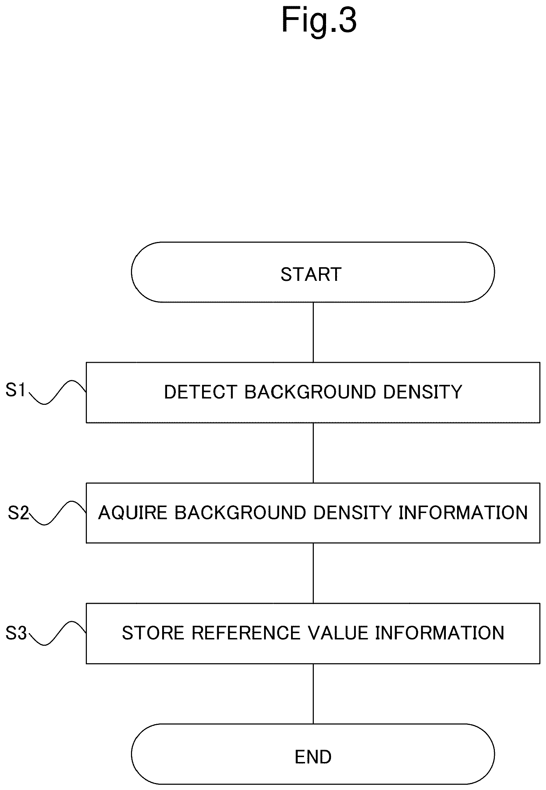

Next, an example of a process for obtaining the reference background density of the background density by the image forming apparatus 1 will be described with reference to the flowchart shown in FIG. 3. This process is performed when the image forming apparatus 1 is started up or when the image forming apparatus 1 returns from the power saving mode to the normal operation mode.

When the image forming apparatus 1 is started up, the controller 100 controls the driving of the density detection sensor 128 to cause the density detection sensor 128 to detect the background density of the intermediate transfer belt 125 (S1), acquires information indicating the background density of the intermediate transfer belt 125 detected by the density detection sensor 128 (S2), sets the background density indicated by the acquired information as a reference value, and stores the reference background density indicating the reference value in the storage device 8 (S3). The process then ends.

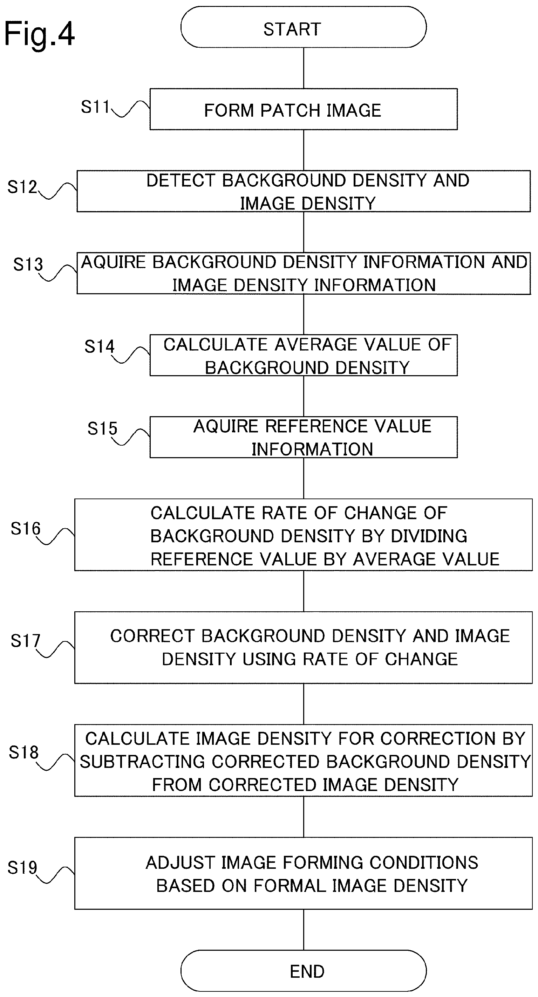

Next, an example of a calibration process according to the embodiment will be described with reference to the flowchart shown in FIG. 4. This process is a process that is repeatedly performed at regular intervals when printing is continuously performed onto a plurality of pieces of recording media, for example, when every time 100 pages are printed.

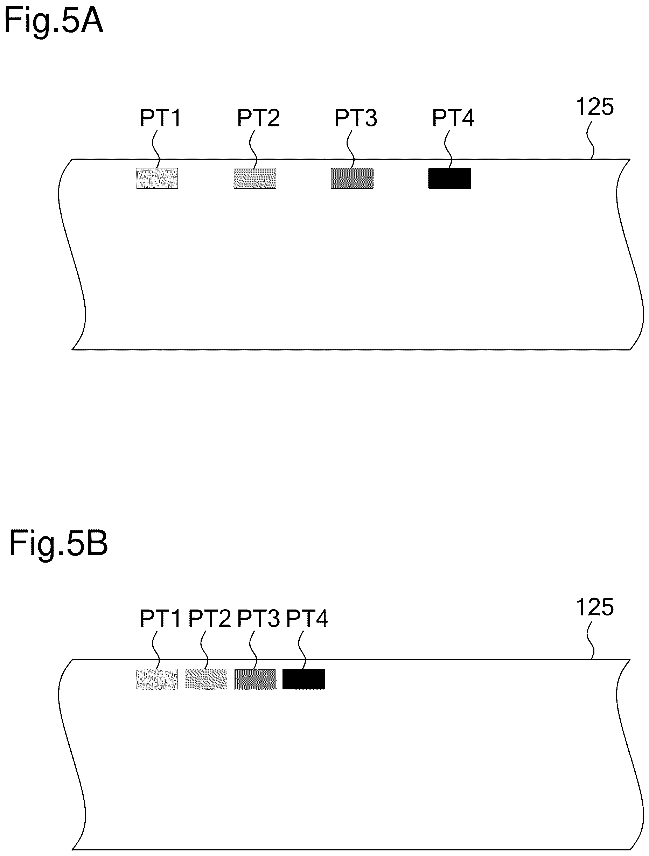

When image transfer of 100N (N is a natural number) pages onto the intermediate transfer belt 125 is completed, the controller 100 controls the driving of the image forming device 12 or the like to form patch images PT1 to PT4 (hereinafter, collectively referred to as "patch image PT") on the intermediate transfer belt 125, as shown in the example of FIG. 5A or 5B (S11). For example, the controller 100 forms one patch image PT (or a plurality of patch images with different densities) for each of the four colors on the intermediate transfer belt 125, or forms a plurality of patch images for only a specific color with different densities.

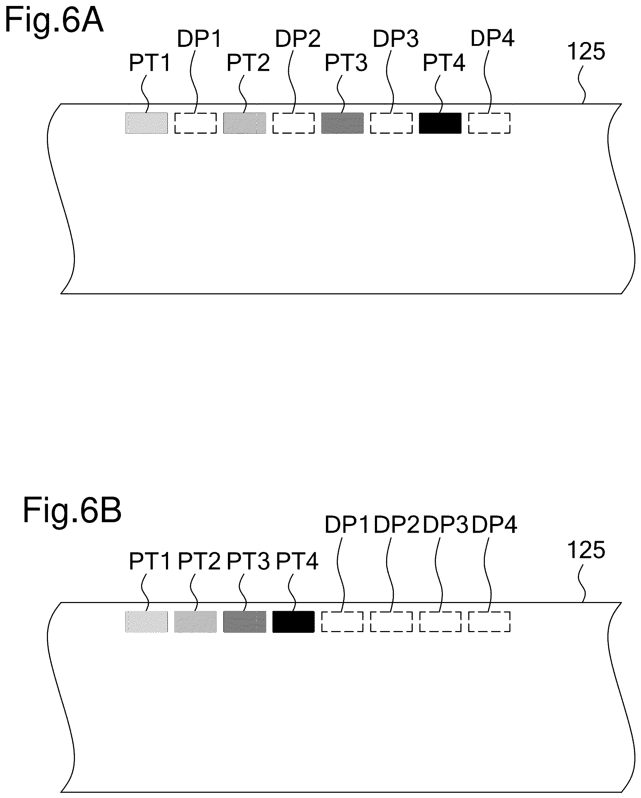

Then, the controller 100 controls the driving of the density detection sensor 128 to cause the density detection sensor 128 to detect the background density of the intermediate transfer belt 125 and the image density of the patch image PT (S12), and acquires information indicating the background density of the intermediate transfer belt 125 and the image density of the patch image PT detected by the density detection sensor 128 (S13). Furthermore, the controller 100 calculates an average value of the background density indicated by the acquired information (S14). FIGS. 6A and 6B are diagrams showing an example of positions of the background density detected by the density detection sensor 128. Rectangles DP1 to DP4 indicated by dashed lines indicate the detection positions of the background density. The controller 100 causes the image forming device 12 to form the patch image PT at the positions shown in FIG. 6A or 6B, and the density detection sensor 128 reads the detected background density.

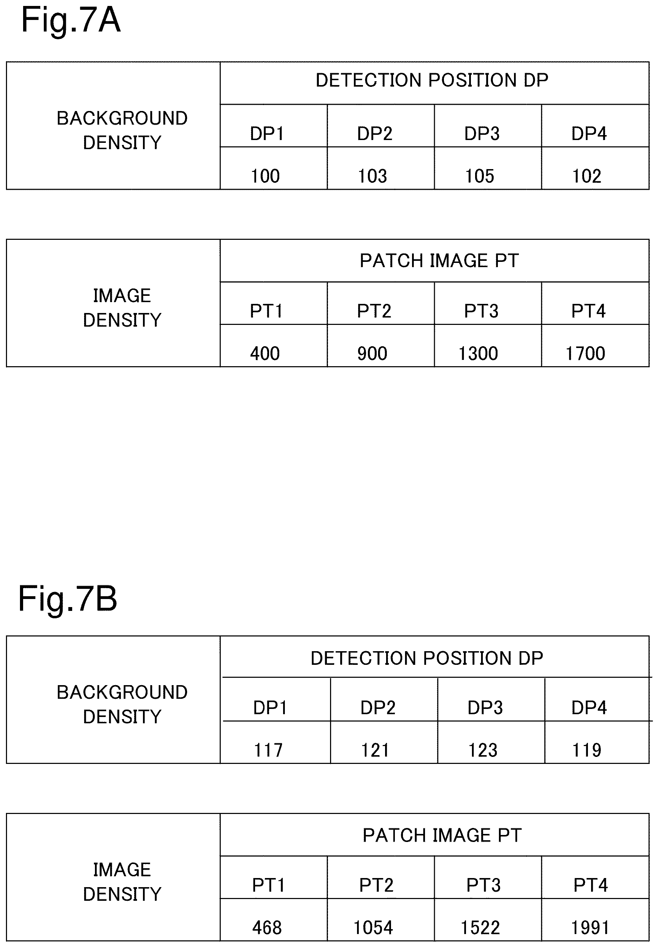

FIG. 7A shows an example of the background density of the intermediate transfer belt 125 and the image density of the patch image PT obtained in S13. As shown in FIG. 7A, when the background densities detected at the above positions by the density detection sensor 128 are 100, 103, 105, and 102, the controller 100 calculates the average value as 102.5 using a formula (100+103+105+102)/4.

Next, the controller 100 reads and acquires the reference background density indicating a reference value of the background density from the storage device 8 (S15), and calculates the rate of change of the background density by dividing the reference value of the background density indicated by the acquired reference background density by the above average value (S16). For example, when the reference value is 120, the rate of change of the background density is approximately 1.171 (≈120/102.5).

The controller 100 corrects the background density and the image density of the patch image (shown in FIG. 7A as an example) acquired in S13 using the calculated rate of change (S17). As shown in FIG. 7B as an example, the corrected background densities are 117 (≈100×1.171), 121, 123, and 119. Also, as shown in FIG. 7A, when the image densities of the patch images detected by the density detection sensor 128 are 400, 900, 1300, and 1700, the corrected image densities are 468 (≈400×1.171), 1054, 1522, and 1991, as shown in FIG. 7B.

The controller 100 subtracts the corrected background density from the corrected image density to calculate an image density for correction used for adjusting the image forming conditions (the calibration process) (S18), and adjusts the image forming conditions based on the calculated image density for correction (S19). The controller 100 performs a calibration process for adjusting the image forming conditions, such as correction of process settings (for example, transfer bias) of each mechanism of the image forming device 12 and correction of gradation, based on the image density for correction. Then, the process ends.

According to the above embodiment, the background density and the image density detected by the density detection sensor 128 are corrected using the rate of change of the background density of the intermediate transfer belt 125, and the image forming conditions are adjusted based on the corrected background density and image density. Therefore, since the image forming conditions are adjusted in accordance with environmental changes within the image forming apparatus 1, it is possible to curb deterioration in image quality due to environmental changes within the image forming apparatus 1.

However, the quality of the intermediate transfer belt deteriorates and wears out over time. When the intermediate transfer belt deteriorates, even if the image density of the patch image formed on the intermediate transfer belt is detected, there is a possibility that the detected value cannot be used to perform calibration with high accuracy.

Furthermore, when the surrounding environment of the density detection sensor that detects the image density of the patch image changes, there is a possibility that an error occurs in the detected value by the density detection sensor, making it impossible to properly adjust the image forming conditions, and the image quality formed on the recording medium will not be stable. In particular, when printing is continuously performed onto a plurality of pieces of recording media, the image forming apparatus operates continuously for a long period of time, which makes it easy for temperature inside the apparatus to rise. When the temperature inside the apparatus rises, temperature around the density detection sensor also rises, which may cause an error in the detected value by the density detection sensor.

Although general techniques are provided for correcting color misregistration caused by deterioration of the intermediate transfer belt due to long-term use, such as accumulated prints, no consideration is given to curbing deterioration in image quality due to changes in the surrounding environment of the density detection sensor, such as temperature rise.

The embodiment has been made in consideration of the above circumstances, and curbs deterioration of image quality due to environmental changes within the apparatus.

The present invention is not limited to the configurations of the above-described embodiment, and various modifications are possible. In addition, in the above-described embodiment, the configurations and processes shown in the above-described embodiment using FIGS. 1 to 7B are merely one embodiment of the present invention, and are not intended to limit the present invention to these configurations and processes.

## Claims

1. An image forming apparatus (1) comprising:
an image forming device (12) which primarily transfers an image to an intermediate transfer body (125) and then secondarily transfers the primarily transferred image from the intermediate transfer body to a recording medium, thereby forming the image on the recording medium;
a density detection sensor (128) which detects a surface density of the intermediate transfer body (125); and
a controller (100) which controls driving of the image forming device (12) based on predetermined image forming conditions,
wherein the controller (100)
controls the driving of the image forming device (12) to form a patch image on the intermediate transfer body (125),
calculates a rate of change of a background density based on a reference background density as a reference value of the surface density of the intermediate transfer body (125) detected by the density detection sensor (128) at a predetermined detection timing and the background density newly detected by the density detection sensor (128) after the reference background density is detected, and
corrects the background density and an image density of the patch image detected by the density detection sensor (128) using the calculated rate of change, and adjusts the image forming conditions based on the corrected background density and the corrected image density.

2. The image forming apparatus (1) according to claim 1, wherein the detection timing is when the apparatus is started up or when the apparatus returns from a power saving mode to a normal operation mode.

3. The image forming apparatus (1) according to claim 1, wherein the controller (100)
calculates a rate of change of the background density based on the reference background density and the background density detected by the density detection sensor (128) during continuous printing on a plurality of pieces of recording media, and
corrects the background density and the image density of the patch image detected by the density detection sensor (128) during the continuous printing using the calculated rate of change, and adjusts the image forming conditions based on the corrected background density and the corrected image density.

4. The image forming apparatus (1) according to claim 1, wherein the controller (100) calculates the rate of change of the background density based on the reference background density and an average value obtained by averaging the background densities at a plurality of positions newly detected by the density detection sensor (128) after the reference background density is detected.
